# EUROPEAN PATENT SPECIFICATION

(11) **EP 2 194 070 B1**
(45) Date of publication and mention of the grant of the patent: **22.08.2012**
(21) Application number: 08020971.1
(22) Date of filing: 03.12.2008
(51) Int. Cl.: C08F 4/651, C08F 10/00

(54) **Electron donor composition for a solid catalyst, solid catalyst composition used in the polymerisation of alpha-olefins, and process for the production of a polymer consisting of alpha-olefin units using the solid catalyst composition**
Elektronendonorzusammensetzung für einen festen Katalysator, feste Katalysatorzusammensetzung zur Polymerisation von Alpha-Olefinen und Verfahren zur Herstellung eines Polymers aus Alpha-Olefineinheiten mit der festen Katalysatorzusammensetzung
Composition de donneurs d'électron pour un catalyseur solide, composition de catalyseur solide utilisé dans la polymérisation d'alpha-oléfines, et procédé de production d'un polymère d'alpha-oléfines utilisant la composition de catalyseur solide

(43) Date of publication of application: 09.06.2010
(73) Proprietor: Süd-Chemie IP GmbH & Co. KG, 80333 München (DE)
(72) Inventor: Zhu, Bochao, Gansu Province, ZIP 730063 (CN); Jia, Junji, Gansu Province, ZIP 730063 (CN); Zhao, Xutao, Gansu Province, ZIP 730063 (CN); Kersting, Meinolf, 82049 Pullach (DE); Gückel, Christian, Dr., 85567 Grafing (DE); Wei, Chen, Chaoyang District, Beijing 100026 (CN); Fang, Eric, Minghang District, Shanghai (CN)
(74) Representative: Stolmár, Matthias

(56) References cited:
- CN-A- 101 195 668
- US-A1- 2006 009 594

## Description

The present invention relates to an electron donor composition comprising a dihydroantthracene derivative and a phthalate ester. Furthermore, the present invention relates to a solid catalyst composition comprising the electron donor composition for use in the α-olefin polymerisation. The present invention further relates to the process for the production of a polymer consisting of α-olefin monomer units using said solid catalyst composition.

It is widely known that catalyst compositions for the polymerisation of α-olefins may comprise magnesium, titanium, halogen and a so-called internal electron donor. It is generally accepted that the stereospecificity and the thereby resulting high isotacticity of the polymer is linked to the presence and nature of the internal electron donor in the catalyst composition. For the sake of initiating and controlling the polymerisation of α-olefins, it is necessary to add a co-catalyst for the activation of the titanium compound, such as an aluminum-trialkyl, and - if needed - an additional so-called external electron donor selected from the group of oxygenated silicon compounds to the catalyst composition.

US 4,336,360 discloses a process for the production of isotactic polymers. The process comprises an internal electron donor selected from various esters of oxygenated organic or inorganic acids. Such an internal donor is added to an aluminum-trialkyl compound and a catalyst composition containing magnesium, titanium, halogen and an external electron donor selected from amines, esters, ketones, ethers and carbonates. The most preferred internal electron donors for the addition to the aluminum-trialkyl are ethyl benzoate, ethyl-p-methoxybenzoate and ethyl-a-naphtoate.

EP 0045977 B2 discloses a new catalyst composition exhibiting a higher activity and stereospecificity compared to earlier disclosed catalyst compositions. The catalyst composition comprises an internal electron donor selected from the group consisting of mono- and polyesters of saturated polycarboxylic acids, mono- and polyesters of unsaturated polycarboxylic acids, mono- and diesters of aromatic bicarboxylic acids, mono- and polyesters of aromatic hydroxy compounds, esters of aromatic hydroxy acids, esters of saturated and unsaturated carboxylic acids and esters of carbonic acid. The preferred internal donors are esters of maleic, pivalic, methacrylic, carbonic and phthalic acids.

A new group of electron donors is disclosed in US 4,971,937. The new internal donors are selected from the group of ethers having two or more ether groups. The most preferred of these ethers are 1,3-diethers, such as 2,2 diisobutyl-1,3-dimethoxypropane, 2-isopropyl-2-isopentyl-1,3-dimethoxypropane or 2,2-bis(cyclohexylmethyl)-1,3-dimethoxypropane.

WO 00/63261 discloses new components and catalysts for the polymerization of olefins. The new catalyst components are internal electron donor compounds selected from the group consisting of esters of substituted succinates. The inventors report that the use of succinate derivatives as internal electron donors yield catalyst compositions with high activity and excellent stereospecificity. Furthermore, it was found that the described catalyst compositions comprising the new electron donor(s) are able to prepare polymers with high stereospecificity even when the polymerization is conducted without the addition of an external donor, such as silicon compounds, esters, amines, ketones and 1,3-diethers. Exemplified compounds of the succinate derivatives are 1-(ethoxycarbonyl)-1-(ethoxyacetyl)-2,6-dimethylcyclohexane, 1-(ethoxycarbonyl)-1-(ethoxyacetyl)-2,5-(dimethylcyclopentane, 1-(ethoxycarbonyl)-1-(ethoxyacetylmethyl)-2-methylcyclohexane, 1-(ethoxycarbonyl)-1-(ethoxy(cyclohexyl)acetyl)cyclohexane. It is described that the succinate derivatives can either be used alone as internal donors or as a mixture with other electron donors, such as 1,3-diethers.

WO 2004/024785 discloses new catalyst components comprising succinate derivatives as electron donor for the polymerization of olefins. Due to a specific preparation method of the catalysts, a higher activity of the catalysts compared to already known catalysts based on the succinate derivatives could have been reached. Succinate compounds for catalysts used in the olefin polymerization are also reported in CN 1681853, CN 1398270 and CN 1313869.

CN 101195668 discloses a new kind of electron donor compound for a catalyst for the olefin polymerization having the following structure:

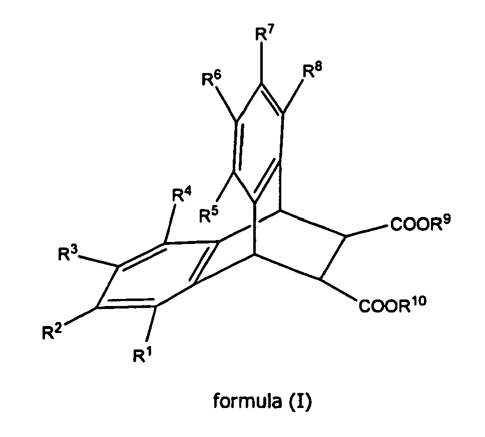

In the above formula, R¹, R², R³, R⁴, R⁵, R⁶, R⁷ and R⁸ may either have the same or different meanings selected from hydrogen, halogen, a linear or branched alkyl group having 1 to 20 carbon atoms, an aromatic group having 6 to 20 carbon atoms or an arylalkyl group having 7 to 20 carbon atoms. R⁹ and R¹⁰ in the above structure may either have the same or different meanings selected from a linear or branched alkyl group having 1 to 20 carbon atoms, an aromatic group having 6 to 20 carbon atoms or an aralkyl group having 7 to 20 carbon atoms. It was found that the use of catalysts comprising the new electron donor results in polymers having a broader molecular weight distribution (MWD) than those earlier disclosed. Polymers with a broader MWD are advantageous since they open the processing window for the converting industry.
It was therefore generally desired to broaden the MWD of polymers consisting of α-olefin monomer units. One disadvantage coming along with catalysts comprising the electron donor structure described in CN 101195668 is that the activity of such a catalyst composition is very low and therefore not competitive with already known catalyst compositions comprising other electron donor types.

Known internal electron donor types other than disclosed in CN 101195668 are succinate and its derivatives, esters of any kind of carboxylic acids, anhydrides, ketones, monoethers, polyethers, alcohols and amides as described in US 4,336,360, EP 0045977 B2, US 4,971,937, WO 00/63261 and WO 2004/024785. Although catalysts having such compounds as internal electron donors show mainly acceptable activities, it is not possible to obtain polymers with a MWD as broad as desired for the converting industry by using them.

It was therefore an object of the invention to provide an electron donor composition for a catalyst composition for the production of polymers consisting of α-olefin monomer units wherein the polymers have both a broader MWD than polymers produced by already known catalyst compositions and acceptable activities, thereby also not essentially deteriorating the desired isotacticity of said polymers.

It was surprisingly found by the inventors that this object may be solved by the combination of two different internal donors as described below. Thus, the above mentioned object is solved by the below mentioned embodiments of the present invention:

The first embodiment of the present invention relates to an electron donor composition comprising
(A) at least one compound represented by the following formula (I) : 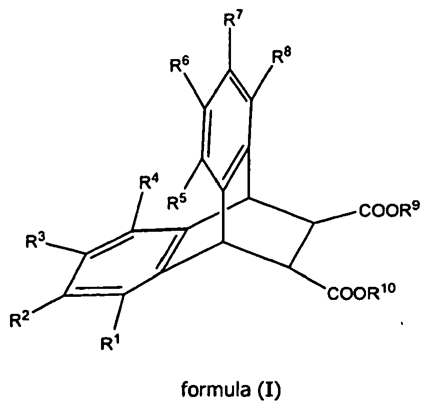 and
(B) at least one compound represented by formula (II): 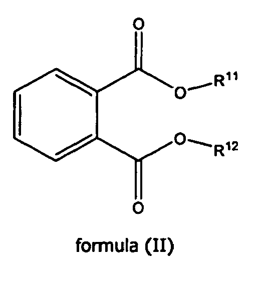 wherein R¹, R², R³, R⁴, R⁵, R⁶, R⁷ and R⁸ have either the same or different meanings selected from hydrogen, halogen, linear or branched C₁₋₂₀alkyl, C₆₋₂₀-aryl, C₇₋₂₀aralkyl, 4- to 7-membered cyclyl; R⁹ and R¹⁰ may either have the same or different meanings selected from linear or branched C₁₋₂₀-alkyl, C₆₋₂₀-aryl, C₇₋₂₀-aralkyl, or 4- to 7-membered cyclyl; and R¹¹ and R¹² have either the same or different meanings selected from C₁₋₁₀-alkyl, 4- to 7-membered cyclyl, C₆₋₂₀-aryl and C₇₋₂₀-aralkyl.

According to another embodiment of the present invention it is preferred that R¹, R², R³, R⁹, R⁵, R⁶, R⁷ and R⁸ of formula (I) have either the same or different meanings selected from hydrogen, halogen and linear or branched C₁₋₆-alkyl.

In yet another embodiment of the present invention, it is preferred that R⁹ and R¹⁰ of formula (I) either have the same or different meanings selected from linear or branched C₁₋₆-alkyl, C₆₋₁₀-aryl and 4- to 7-membered cyclyl.

According to yet another embodiment of the present invention, it is preferred that R¹¹ and R¹² of formula (II) have either the same or different meanings selected from C₁₋₆-alkyl and 4- to 7-membered cyclyl.

The terms "C₁₋₆-alkyl", "C₁₋₁₀-alkyl" and "C₁₋₂₀-alkyl" are herein referred to as linear or branched alkyl groups having 1 to 6, 1 to 10 and 1 to 20 carbon atoms, respectively. Examples for such alkyl groups are methyl, ethyl, n-propyl, iso-propyl, n-butyl, iso-butyl, sec-butyl (1-methylpropyl), tert-butyl, isopentyl, n-pentyl, tert-pentyl (1,1- dimethylpropyl), 1,2-dimethylpropyl, 2,2-dimethylpropyl (neopentyl), 1-ethylpropyl, 2-methylbutyl, n-hexyl, iso-hexyl, 1,2-dimethylbutyl, 1-ethyl-1-methylpropyl, 1-ethyl-2- methylpropyl, 1,1,2-trimethylpropyl, 1,2,2-trimethylpropyl, 1-ethylbutyl, 1-methylbutyl, 1,1-dimethylbutyl, 2,2-dimethylbutyl, 1,3-dimethylbutyl, 2,3-dimethylbutyl, 3,3-dimethylbutyl, 2-ethylbutyl, 1-methylpentyl, 2-methylpentyl, 3-methylpentyl, n-heptyl, n-octyl, n-nonyl, n-decyl, n-undecyl, and n-dodecyl .

The terms "C₆₋₁₀-aryl" and "C₆₋₁₈-aryl" are herein referred to as aromatic groups having 6 to 10 and 6 to 18 carbon atoms, respectively. Preferred examples of such aromatic groups are substituted and unsubstituted phenyl, naphthyl and anthracyl. More preferred groups are phenyl and naphtyl.

The phrase "C₇₋₂₀-aralkyl" means a group in which a random hydrogen atom in an above-described "C₁₋₁₀-alkyl" is substituted with an above-described "C₆₋₁₀-aryl", and specific examples include a benzyl group, a phenethyl group, and a 3-phenyl-1-propyl group.

The phrase "4- to 7-membered cyclyl" means a cylic hydrocarbon group having 4 to 7 atoms wherein one or more of the methylene groups may be substituted by NH, O or S. Typical examples of such groups are cyclobutane, cyclopentane, cyclohexane and cycloheptane.

A further embodiment of the present invention is the electron donor composition according to the above mentioned embodiments, wherein the wt% ratio based on the total weight of the catalyst compositions of compound (A) represented by formula (I) to compound (B) represented by the formula (II) is in the range of 1:10 to 2:1, more preferred 1:8 to 1.5:1, still more preferred 1:6 to 1.2:1 and most preferred 1:4 to 1:1. Below a range of 1:10, the MWD of the polymers is lower, whereas a range above 2:1 lowers the activity of the catalyst.

Any of the following compounds can preferably be chosen as compound (A) represented by the above formula (I) according to the invention:
9,10-dihydroanthracene-9,10-α,β-methyl butanedioate,
9,10-dihydroanthracene-9,10-α,β-diethyl butanedioate,
9,10-dihydroanthracene-9,10-α,β-butanedioic acid dipropyl ester,
9,10-dihydroanthracene-9,10-α,β-diisopropyl succinate,
9,10-dihydroanthracene-9,10-α,β-butanedioic acid dibutyl ester,
9,10-dihydroanthracene-9,10-α,β-butanedioic acid diisobutyl ester,
9,10-dihydroanthracene-9,10-α,β-butanedioic acid dicyclopentyl ester,
9,10-dihydroanthracene-9,10-α,β-butanedioic acid dicyclohexyl ester and
9,10-dihydroanthracene-9,10-α,β-butanedioic acid dibenzyl ester.

The present invention is, however, not limited to these compounds and it has to be understood that every compound similar to these compounds being embraced by formula (I) are also able to solve the above mentioned object of the invention.

In the same way, the compounds (B) represented by formula (II) are not limited, but the compounds mentioned below are rather preferred examples:
dimethyl phthalate,
diethyl phthalate,
dipropyl phthalate,
diisopropyl phthalate,
dibutyl phthalate,
diisobutyl phthalate,
dicyclopentyl phthalate and
dicyclohexyl phthalate,
diisooctylphthalate
dioctylphthalate.

Another embodiment of the present invention is a solid catalyst composition comprising the electron donor composition of the before mentioned embodiments.

It is preferred that the solid catalyst composition further comprises a Mg-containing compound and a Ti-containing compound.

In a further preferred embodiment the Mg-containing compound comprises MgHal₂, wherein Hal is Cl, Br or I. It is still more preferred that the Mg-containing compound comprises MgCl₂.

The Ti-containing compound may be a compound represented by the general formula (III) Ti(OR¹³)ₘ₋ₓYₓ, wherein R¹³ is a linear or branched C₁₋₁₀-alkyl having the same meaning as defined above, Y is Cl, Br or J, m is 3 or 4 and x is 1, 2, 3 or 4. Examples of the more preferred Ti-containing compounds are TiCl₃ and TiCl₄.

According to a preferred embodiment of the solid catalyst composition of the present invention, the wt% ratio based on the total weight of the catalyst composition of the Mg-containing compound to the electron donor composition consisting of compounds (A) and (B) is in the range of 0,1 to 50, more preferred 1 to 40 still more preferred 2 to 30. Such a molar ratio range is advantageous with regard to a high isotacticity of the obtained polymer.

The Mg-containing compound usually represents a support for the solid catalyst composition of the present invention. Such a support is hereinafter referred to as Mg-containing support. Catalysts having such a Mg-containing support are widely known and described in several applications, such as US 4,298,718, US 4,495,338, EP 0 262 935 B1 and EP 0 303 704 B1. The Mg-containing supports mentioned in these documents may all be used in the present invention as support.

The before-mentioned Mg-containing compound is preferably an adduct of MgHal₂, wherein Hal is Cl, Br or I, preferably Cl, with an alcohol. The adduct is represented by formula (IV) MgHal₂ x qR¹⁴OH, wherein q is a number between 0.3 and 5 (including the values 0.3 and 5), preferably between 0.5 and 4 (including the values 0.5 and 4) and more preferably between 1 and 3.5 (including the values 1 and 3.5), and R¹⁴ is a hydrocarbon group having 1 to 8 carbon atoms. The term "hydrocarbon group having 1 to 8 carbon atom" is herein referred to as a straight or branched chain hydrocarbon radical having from 1 to 8 carbon atoms, preferably from 1 to 6 carbon atoms, or a cyclic hydrocarbon radical having from 3 to 8 carbon atoms. The straight or branched chain hydrocarbon radical is an "alkyl".
Illustrative examples of the "alkyl" is methyl, ethyl, n-propyl, iso-propyl, n-butyl, iso-butyl, s-butyl, t-butyl, 2-methylbutyl, n-pentyl, s-pentyl, n-hexyl, n-heptyl, n-octyl, 2-ethylhexyl, trifluormethyl, pentafluorethyl or 2,2,2-trifluorethyl.
More preferred as hydrocarbon group having 1 to 8 carbon atoms is methyl and ethyl, and ethyl is particularly preferred. The cyclic hydrocarbon radical is a "cycloalkyl", a "cycloalkenyl" or an "aryl". Illustrative example of the "cycloalkyl" is a monocyclic saturated ring such as cyclopropyl, cyclopentyl, cyclohexyl, cycloheptyl or cyclooctyl. The "cycloalkenyl" is a hydrocarbon ring having one or more double bonds. Illustrative examples of cycloalkenyls are cyclopentenyl, cyclohexenyl, cycloheptenyl and cyclooctenyl. The "aryl" means an aromatic hydrocarbon radical including phenyl, naphthyl or anthracyl.

The form of the support is not limited to any kind, but a spherical or granular form is preferred.

The preparation process of the Mg-containing support, preferably in the spherical form, comprises at least two steps. In a first step, a melt of the MgHal₂ adduct, preferably MgCl₂, is prepared by mixing the R¹⁴OH compound and the MgHal₂ in the presence of a hydrocarbon, e.g. a mineral oil, such as paraffinic oils, naphthenic oils and aromatic oils, which is immiscible with the MgHal₂ x qR¹⁴OH adduct. Usually, the mixing takes place under the vigorous stirring at elevated temperatures around the melting temperature of the MgHal₂ x qROH adducts between 100 °C and 170 °C. Subsequently, the emulsion is cooled down to a temperature below 0 °C thereby causing precipitation of the adduct particles, preferably in the spherical form. Similar preparation methods are for example described in US 4,399,054, US 4,469,648, US 6,962,889, EP 1 251 141 A and EP 1 905 783 A.

In the before mentioned preparation methods of the solid catalyst composition of the present invention the spherical support can - prior to the treatment with the Ti-containing compound - be dried and/or dealcoholated after the solidification to achieve the preferred molar content of the above mentioned alcohol R¹⁴OH. The preferred molar content is between 0.3 and 5 mol, more preferably 0.5 and 4 mol, even more preferred 1 and 3.5 mol alcohol based on 1 mol of the Mg-containing compound. The drying and dealcoholation process can take place at elevated temperatures between 50 and 130 °C and/or reduced pressure. The virgin or partially dried and/or dealcoholated support may then be suspended in a cold solution of the Ti-containing compound and the suspension is heated up to a temperature between 70 and 150 °C and kept at this temperature for 0.5 to 3 hours. This procedure can be conducted once or several times. The electron donor compounds (A) and (B) are either added to the Ti-containing solution together in one treatment step or added separately in two or more treatment steps. If the electron donor compounds (A) and (B) are added separately, the electron donor compound (A) is added firstly in one or more treatment steps and the electron donor compound (B) is added thereafter in one or more treatment steps. Subsequently, the obtained product is washed with a hydrocarbon solvent to remove undesired by-products and the excessive Ti-containing compound. Such preparation methods are e.g. disclosed in EP 395083 A, EP 553805 A, WO 98/44009 and US 6,962,889.

Various other preparation methods can also be used to produce the solid catalyst of the present invention.

In a first preparation method of the solid catalyst of the present invention, the Mg-containing support is treated with the Ti-containing compound once or several times and the two compounds (A) and (B) of the electron donor composition are either added contemporaneously or, if the treatment with the Ti-containing compound is done in several steps, consecutively, whereas the electron donor compound (A) is added before the electron donor compound (B), or vice versa.

In another preparation method of the solid catalyst of the present invention, the Mg-containing support is milled together with the electron donors of the compounds (A) and (B) it is subsequently treated with a solution of the Ti-containing compound.

In general, the products obtained by the two last-mentioned preparation methods are washed with a hydrocarbon solvent to remove undesired by-products.
Hydrocarbons are pentane, isopentane, hexane, heptane, octane, nonane, decane, dodecane etc. as well as aromatic HC like toluene, the xylenes, ethylbenzene or other aliphatic substituted benzenes etc.
Another preparation method of the solid catalyst according to the invention comprises the treatment of the Mg-containing support with a solution of the Ti-containing compound and the electron donor compounds (A) and (B) in excess at temperatures in the range of 50 to 150 °C. After this treatment, the obtained product is washed with a hydrocarbon solvent until all undesired by-products are removed.

In another embodiment of the solid catalyst of the present invention, the preparation process comprises the treatment of the Mg-containing compound with an excess of a solution of the Ti-containing compound at elevated temperatures, a second treatment step of the Mg-containing support with an excessive amount of the solution of the Ti-containing compound and the electron donor compound (A), and a third treatment step of the Mg-containing support with an excessive amount of the solution of the Ti-containing compound and the electron donor compound (B). All treatments are conducted at elevated temperatures in the range between 50 and 150 °C. After the before-mentioned treatment steps the product is washed with a hydrocarbon solvent until all undesired by-products are removed.

In yet another embodiment of the invention, the preparation process comprises the concurrent milling of the Mg-containing compound with the compounds of the electron donor composition of the present invention and a subsequent treatment of the mixture with a solution of the Ti-containing compound. The milling should last until the Mg-containing compound is converted to the active form as described in EP 0 395 083. The activated composition is treated with an excess of the Ti-containing compound once or several times at elevated temperatures, such as 50 to 150 °C. Finally, the obtained catalyst composition is washed with an inert hydrocarbon solvent to remove undesired by-products.

In a further embodiment, the solid catalyst obtained by any one of the preparation methods described above may further activated with a Cl-containing hydrocarbon, such as chlorobenzene, chloromethane, dichloromethane and 1,2-dichloroethane for a period of 1 to 10 hours, and is subsequently washed with the inert hydrocarbon solvent.

In the recently published WO 08/037630 another preparation procedure for an above described catalyst is disclosed using Mg-containing compounds as precursor material for the support preparation. The obtained Mg-containing support is subsequently reacted with the Ti-containing compound and the internal donor to yield the catalyst components for the polymerization of α-olefins. Similar preparation procedures are also reported in US 5,034,361 A, US 5,082,907 A, US 5,106,806 A, US 5,247,032 A and EP 0 926 165 A. These preparation methods may also be used for the preparation of the catalyst of the present invention.

In yet another preparation method, the solid catalyst components according to this invention can be prepared with the reference to the preparation method for titanium-based solid catalyst components published in CN 85100997. According to this method, Mg-containing compounds are dissolved in the solvent system composed of an organic epoxy compound, organophosphorus compound and an inert diluent, thereby forming a uniform solution which is then mixed with the Ti-containing compound. Then the desired solid substance is precipitated in the presence of the additional precipitation agent (e.g. organic anhydride, organic acid, ether and ketone). The obtained solid catalyst components are then processed by TiCl₄ and an inert diluent.

A yet another embodiment of the present invention is the use of the solid catalyst composition of the present invention for the polymerization of α-olefin monomers. The α-olefin monomers polymerized in the presence of the solid catalyst composition of the present invention are preferably compounds represented by formula (V) H₂C=CHR¹⁵, wherein R¹⁵ is hydrogen or a hydrocarbon group having 1 to 6 carbon atoms. Preferred examples of the radical R¹⁵ include methyl, ethyl, n-propyl, iso-propyl, n-butyl, iso-butyl, n-pentyl and n-hexyl. In other words, the preferred α-olefin compounds used in the present invention for the polymerization, include ethylene, propene, 1-butene, 4-methyl-1-pentene, 1-hexene and 1-octene. In a preferred embodiment of the present invention, the solid catalyst composition is used for the polymerization of propylene and the copolymerization of propylene and ethylene. In other words, one or more different α-olefin monomers may be used for the polymerization. The catalyst composition of the present invention is not only, but, in particular, suitable for the production of a polyolefin, such as polypropylene, with a broader molecular weight distribution, higher isotacticity and higher activity compared to catalyst compositions already known in the state of the art.

Of a particular interest are polymers with a MWD of greater than 4, a xylene soluble fraction below 5 % and an activity of greater or equal to 20 kg_{PP}/g_{cat}.

Another embodiment of the present invention pertains to the process for the production of a polymer comprising the following steps:
a) providing a solid catalyst composition according to the invention,
b) reacting said catalyst composition with at least one organoaluminum compound having the general formula (VI) AlR¹⁶ₙX₃₋ₙ, wherein R is H or an C₁₋₂₀-alkyl group, X is halogen and 1 < n ≤ 3,
c) adding an one or more α-olefin monomer compounds, and
d) polymerizing the α-olefin monomer, thereby obtaining a polyolefin

From the viewpoint of enhancing the stereospecificity of the catalyst composition, the present invention provides yet another embodiment, wherein step b) of the before-mentioned process for the production of a polymer is be conducted in the presence of an external donor compound.

The α-olefin monomer compounds used in the above mentioned processes for the production of a polymer are the same as mentioned above. In the process for the production of a polymer according to the invention the catalyst composition of the present invention is reacted with the organoaluminum compound of formula (VI) AlR¹⁶ₙX₃₋ₙ in order to activate the solid catalyst composition of the present invention for the polymerization of olefins. X is halogen, such as Cl, Br and I, preferably Cl and Br, more preferably Cl. R¹⁶ is an alkyl having 1 to 6 carbon atoms. Examples for an alkyl group having 1 to 6 carbon atoms include methyl, ethyl, n-propyl, iso-propyl, n-butyl, iso-butyl, s-butyl, t-butyl, 2-methylbutyl, n-pentyl, s-pentyl and n-hexyl, wherein ethyl and isobutyl are more preferred.

Examples of the organoaluminum compound of formula AlR¹⁶ₙX₃₋ₙ include trialkyl aluminum compounds, such as triethyl aluminum, tributylaluminum and triisobutyl aluminium, alkyl aluminum halide, such as diethyl aluminum chloride or alkyl aluminum hydride, wherein triethylaluminum is preferred. In another embodiment of the present invention the organoaluminum compound is selected from the group of alkylalumoxanes, such as methyl- or ethylalumoxanes.

If an asymmetric α-olefin monomer compound is polymerized by means of a solid catalyst composition according to the invention, it is desired to yield a polymer with a high isotacticity or isotactic index. In order to achieve a polymer with high isotacticity, it is preferred to add an external electron donor to the catalyst composition prior to the polymerization. The use of such an external electron donor usually increases the isotacticity of the polymer compared to a polymerization conducted without the external electron donor.

As an external electron donor compound, a silicon-containing compound or a non-silicon-containing compound may be used.

Suitable silicon-containing compounds for the present invention are compounds represented by the general formula (VII) R¹⁷ₐR¹⁸_{b}Si (OR¹⁹)_{c}, wherein R¹⁷ and R¹⁸ are hydrocarbon groups having 1 to 18 carbon atoms, such as alkyl groups having 1 to 18 carbon atoms, wherein one or more carbon atoms may be exchanged by heteroatoms, such as N, O or S, alkenyl groups having 1 to 18 carbon atoms, alkylidene groups having 1 to 18 carbon atoms, or aromatic groups having 1 to 18 carbon atoms. The term "hydrocarbon group having 1 to 18 carbon atom" is herein referred to as a straight or branched chain hydrocarbon radical having from 1 to 18 carbon atoms, preferably from 1 to 8 carbon atoms, or a cyclic hydrocarbon radical having from 3 to 8 carbon atoms. The straight or branched chain hydrocarbon radical is an "alkyl".

Illustrative examples of the "alkyl" is methyl, ethyl, n-propyl, iso-propyl, n-butyl, iso-butyl, s-butyl, t-butyl, 2-methylbutyl, n-pentyl, s-pentyl, n-hexyl, n-heptyl, n-octyl, 2-ethylhexyl, trifluormethyl, pentafluorethyl or 2,2,2-trifluorethyl.
More preferred as hydrocarbon group having 1 to 8 carbon atoms is methyl and ethyl, and methyl is particularly preferred. The cyclic hydrocarbon radical is a "cycloalkyl", a "cycloalkenyl" or an "aryl". Illustrative example of the "cycloalkyl" is a monocyclic saturated ring such as cyclopropyl, cyclopentyl, cyclohexyl, cycloheptyl or cyclooctyl . The "cycloalkenyl" is a hydrocarbon ring having one or more double bonds. Illustrative examples of cycloalkenyls are cyclopentenyl, cyclohexenyl, cycloheptenyl and cyclooctenyl. The "aryl" means an aromatic hydrocarbon radical including phenyl, naphthyl or anthryl.

R¹⁹ represent an alkyl group containing 1 to 18 carbon atoms, wherein the carbon atoms may be exchanged by heteroatoms, such as N, O or S. The term alkyl group has the same meaning as defined above; preferred groups of R¹⁹ are alkyl groups, such as methyl, ethyl, n-propyl, iso-propyl, n-butyl and iso-butyl, wherein methyl is particularly preferred. a and b are independently an integer between 0 and 2 (including 0 and 2), the preferred number is 1. c is an integer between 1 and 3 (including 1 and 3), wherein the preferred number is 2.

Preferred examples of the above mentioned silicon-containing compound include cyclohexyl methyl dimethoxy silane, diisopropyl dimethoxy silane, dibutyl dimethoxy silane, diisobutyl dimethoxy silane, diphenyl dimethoxy silane, methyl tert-butyl dimethoxy silane, dicyclopentyl dimethoxy silane, isobutyl isopropyl dimethoxy silane, secbutyl isopropyl dimethoxy silane, 2-(ethyl)pyridyl-2-tert-butyl dimethoxy silane, 1,1,1-fluoride-2-propyl-2-(ethyl)pyridyl-2-tert-butyl dimethoxy silane and 1,1,1-fluoride-2-propyl-methyl dimethoxy silane. Furthermore, preferably chosen silicon-containing compounds are compounds wherein R¹⁷ is a branched alkyl group (a=1, b=0 c=3), which may contain heteroatoms, and R¹⁹ is methyl. Examples of such silicon-containing compounds include cyclohexyl trimethoxy silane, tert-butyl trimethoxy silane and tert-hexyl trimethoxy silane.

As mentioned above, the non-silicon-containing compounds may also be used in the present invention. Examples for such non-silicon-containing compounds are 1,3-diethers, such as 9,9-bis(methoxymethyl)fluorine, esters, such as 4-ethoxybenzoate, ketones, amines and heterocyclic compounds, such as 2,2,6,6-tetramethylpiperidine.

As described above, the use of external electron donors during the (co)polymerization of α-olefins, in particular propylene, yields polymers with high isotacticity and low xylene solubility (expressed as XS amount), respectively. The amount of the external electron donor added to the polymerization system is usually expressed as the molar ratio between the organoaluminum compound and the added external electron donor. To control the XS value within a desired range, the external donor is usually added in a molar range of 0.1 to 400, more preferred 1 to 350 and most preferred between 5 and 300, based on 1 mol organoaluminum compound.

In the production process of the present invention, the polymerization may take place in a slurry phase, wherein either an inert hydrocarbon solvent, usually heptane, or - in the bulk phase - a liquid monomer, such as propylene, is used as the reaction medium. Alternatively, the so-called gas-phase process may be used, wherein the monomer is polymerized in either agitated or fluidized bed reactors or reactor loop configuration.

Although each of the above mentioned polymer production processes are unique, the process conditions are very similar. The temperature during the polymerization is usually between 20 to 120 °C, preferably between 40 t 95 °C and the pressure is usually kept between 5.10⁵ - 10.10⁶ Pa (5 to 100 bar), and in the gas-phase polymerization preferably between 1.10⁵ - 50.10⁵ Pa (1 and 50 bar), and for slurry bulk polymerization between 1.10⁵ - 60.10⁵ Pa (1 and 60 bar). In addition to the α-olefin monomer compound, hydrogen may be fed to the reactor to control the molecular weight of the polymer.

### Detailed implementing methods

### Test method:

1. Nuclear magnetic resonance measurement:
   Approximately 5 g of the polymer which has been dried at 130 °C in vacuum for 2 hours was put into a glass tube, and the tube was then put into a water bath at 40 °C for 30 minutes. The tube was then put into the sample chamber of the NMR instrument (OXFORD MARAN Ultra). The XS-value could be obtained through a standard curve.
2. Analysis for the catalyst components:
   Spectrophotometry has been applied in order to determine the Ti-content and gas chromatography has been conducted for determining the ester content.
3. General evaluation procedures for the bulk polymerization of ethylene (liquid-phase monomer):
   A 5 L stainless steel high-pressure polymerizer has been cleaned in that the air has been replaced by propylene gas. The stainless steel high-pressure polymerizer was equipped with an agitator, a pressure gauge, a thermometer, a catalyst feeding system, a monomer feeding system and a thermostatic jacket. 10 to 15 mg solid catalyst components, 2.5 mmol triethyl aluminum, 0.1 mmol cyclohexylmethyl dimethoxy silane, 0.04 mol H₂ and 2.3 L liquid-phase propylene were added into the polymerizer. The mixture was heated up to 70 °C within 10 minutes and was reacted for 2 hours at 70 °C. When the reaction was finished the unreacted monomers were removed and polymeric polypropylene powders were obtained.
4. The molecular weight distribution of the polymers was determined by gel permeation chromatography.
5. For the determination of the melt index 3.5 g of polypropylene powders were mixed with an antioxidant a process stabilizer such as a phosphate compound and a chlorine scavenger such as calcium stearate and the temperature was set to 230 °C. Before the measurement the mixture was kept at this temperature more than 15 minutes. The polypropylene powders were then put into the MODULAR MELT FLOW. The flow time of the melt polypropylene sample was recorded and the sample was weighed. Then, the melt index (g/10 min.) was calculated from the obtained values.

### Examples

Examples 1 to 7 refer to the preparation of solid catalyst components.

### Example 1

In a reactor, which has been fully floated by high-purity N₂, 250 ml TiCl₄ was added and cooled to -20 °C. Then 10.0 g spherical carrier of MgCl₂·2.6CH₃CH₂OH were gradually added. The temperature was raised by maintaining a certain speed and 2.0 g 9,10-dihydroanthracene-9,10-α,β-diethyl butanedioate and 0.8 ml diisobutyl phthalate were added at 40 °C. The mixture was heated to 100 °C with a constant speed of temperature rise and kept at this temperature for 1.5 hours. Then the mixture was settled for 5 minutes, and the filtrate was removed. Then, 120 ml TiCl₄ was added and the mixture was heated to 125 °C and kept at this temperature for half an hour. After settlement and filtration 60 ml hexane were added and the so obtained spherical catalyst has been washed at the boiling point of hexane. Upon this procedure 7 g spherical catalyst component could be obtained.

### Example 2

The same preparation method as in Example 1 was applied except that 2.5 g 9,10-dihydroanthracene-9,10-α,β-diethyl butanedioate and 1.0 ml diisobutyl phthalate were added. 7.2 g of the spherical catalyst components were obtained.

### Example 3

The same preparation method as in Example 1 has been applied except that 2.2 g 9,10-dihydroanthracene-9,10-α,β-diethyl butanedioate and 1.2 ml diisobutyl phthalate were added. 7 g of spherical catalyst component were obtained.

### Example 4

The same preparation method as in Example 1 was applied except that 2.7 g 9,10-dihydroanthracene-9,10-α,β-diethyl butanedioate and 1.3 ml diisobutyl phthalate were added. 7.1 g spherical catalyst component were obtained.

### Example 5

The same preparation method as in Example 1 was applied except that 3.2 g 9,10-dihydroanthracene-9,10-α,β-diethyl butanedioate and 1.8 ml diisobutyl phthalate were added. 7.3 g of spherical catalyst component were obtained.

### Example 6

The same preparation method as in Example 1 was applied except that 3.7 g 9,10-dihydroanthracene-9,10-α,β-diethyl butanedioate and 2.0 ml diisobutyl phthalate were added. 7.4 g of spherical catalyst component were obtained.

### Comparative examples 1 to 5

The same preparation methods as in the above Examples 1 to 7 were applied in the Comparative examples except that the added multi-ester compound is replaced by a single multiple carboxylate or succinate.

### Comparative example 1

The same preparation method as in Example 1 was applied except that instead of the two electron donor compounds only 1.5 ml diisobutyl phthalate was added. 7 g of spherical catalyst component were obtained.

### Comparative example 2

The same preparation method as in Example 1 was applied except that instead of the two electron donor compounds only 1.8 ml diisobutyl phthalate was added. 7.2 g of spherical catalyst components were obtained.

### Comparative example 3

The same preparation method as in Example 1 was applied except that instead the two electron donor compounds only 2,1 ml diisobutyl phthalate was added. 7.3 g of spherical catalyst components were obtained.

### Comparative example 4

The same preparation method as in Example 1 was applied except that instead of the two electron donor compounds only 2.7 g 9,10-dihydroanthracene-9,10-α,β-diethyl butanedioate was added. 7.2 g of spherical catalyst components were obtained.

### Comparative example 5

The same preparation method as in Example 1 was applied except that instead of the two electron donor compounds only 3.2 g 9,10-dihydroanthracene-9,10-α,β-diethyl butanedioate was added. 7.3 g of spherical catalyst components were obtained.

Propylene polymerization was conducted both with the components of the Examples 1 to 7 and the Comparative examples 1 to 5 according to the above described process of the bulk polymerization experiment of propylene (the liquid monomer). The titanium content, the content of the ester and the polymerization results of all catalyst components of the Examples 1 to 7 and the Comparative examples 1 to 5 are listed in Table 1.

**Table 1:**

| | Ti | Ester A | Ester B | Ratio | Activity | MI | Xylene soluble part | Mw | Mn | Mw/Mn |
|---|---|---|---|---|---|---|---|---|---|---|
| | [wt%] | [wt%] | [wt%] | A/B | KgPP/gCat | g/10min | [%] | x10-4 | x10-4 | |
| Example 1 | 3,49 | 1,11 | 3,14 | 0,35 | 16,91 | 9,84 | 2,34 | 12,95 | 3,12 | 4,15 |
| Example 2 | 2,74 | 1,48 | 3,37 | 0,44 | 27,73 | 9,59 | 2,06 | 11,74 | 2,81 | 4,18 |
| Example 3 | 2,36 | 4,75 | 6,85 | 0,69 | 26,72 | 9,83 | 2,26 | 17,50 | 3,36 | 5,21 |
| Example 4 | 2,53 | 4,44 | 7,53 | 0,59 | 27,30 | 9,36 | 2,25 | 9,02 | 1,95 | 4,63 |
| Example 5 | 2,28 | 5,12 | 8,29 | 0,62 | 24,41 | 9,24 | 2,35 | 12,08 | 1,72 | 7,02 |
| Example 6 | 2,51 | 5,96 | 10,40 | 0,57 | 20,08 | 8,76 | 2,11 | 6,49 | 1,34 | 4,84 |
| Comparative Example 1 | 2,87 | - | 11,51 | | 35,48 | 9,72 | 2,28 | 7,87 | 2,23 | 3,53 |
| Comparative Example 2 | 3,28 | - | 12,07 | | 36,57 | 9,36 | 2,46 | 6,64 | 2,10 | 3,16 |
| Comparative Example 3 | 2,97 | - | 12,39 | | 35,48 | 9,84 | 1,81 | 7,09 | 2,17 | 3,27 |
| Comparative Example 4 | 2,71 | 5,06 | - | | 14,56 | 10,90 | 4,73 | 8,65 | 1,93 | 4,48 |
| Comparative Example 5 | 2,82 | 7,89 | - | | 18,35 | 10,60 | 4,60 | 8,90 | 2,12 | 4,20 |

## Claims

1. Electron donor composition comprising
(A) at least one compound represented by the following formula (I) : 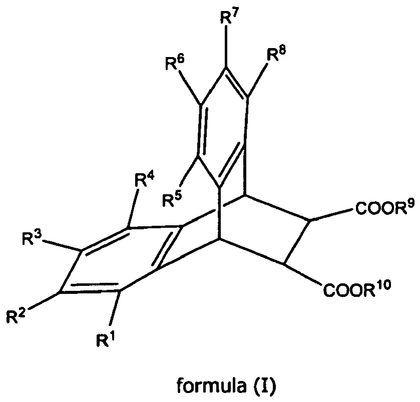 and
(B) at least one compound represented by formula (II): 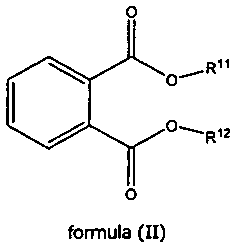 wherein R¹, R², R³, R⁴, R⁵, R⁶, R⁷ and R⁸ have either the same or different meanings selected from hydrogen, halogen, linear or branched C₁₋₂₀-alkyl, C₆₋₂₀-aryl, C₇₋₂₀-aralkyl, 4- to 7-membered cyclyl; R⁹ and R¹⁰ may either have the same or different meanings selected from linear or branched C₁₋₂₀-alkyl, C₆₋₂₀-aryl, C₇₋₂₀-aralkyl, 4- to 7-membered cyclyl; and R¹¹ and R¹² have either the same or different meanings selected from C₁₋₁₀-alkyl, 4- to 7-membered cyclyl, C₆₋₂₀-alkyl and C₇₋₂₀-aralkyl.

2. Electron donor composition according to claim 1, wherein R¹, R², R³, R⁴, R⁵, R⁶, R⁷ and R⁸ have either the same or different meanings selected from hydrogen, halogen and linear or branched C₁₋₆-alkyl.

3. Electron donor composition according to claim 1 or 2, wherein R⁹ and R¹⁰ may either have the same or different meanings selected from linear or branched C₁₋₆-alkyl, C₆₋₁₀-aryl and 4- to 7-membered cyclyl.

4. Electron donor composition according to any one of claims 1 to 3, wherein R¹¹ and R¹² have either the same or different meanings selected from C₁₋₆-alkyl and 4- to 7-membered cyclyl.

5. Electron donor composition according to any one of claims 1 to 4, wherein the wt% ratio (A)/(B) is in the range of 1:10 to 2:1.

6. Electron donor composition according to any one of claims 1 to 5, wherein compound (A) is selected from
9,10-dihydroanthracene-9,10-α,β-methyl butanedioate,
9,10-dihydroanthracene-9,10-α,β-diethyl butanedioate,
9,10-dihydroanthracene-9,10-α,β-butanedioic acid dipropyl ester,
9,10-dihydroanthracene-9,10-α,β-diisopropyl succinate,
9,10-dihydroanthracene-9,10-α,α-butanedioic acid dibutyl ester,
9,10-dihydroanthracene-9,10-α,β-butanedioic acid diisobutyl ester,
9,10-dihydroanthracene-9,10-α,β-butanedioic acid dicyclopentyl ester,
9,10-dihydroanthracene-9,10-α,β-butanedioic acid dicyclohexyl ester and
9,10-dihydroanthracene-9,10-α,β-butanedioic acid dibenzyl ester.

7. Electron donor composition according to any one of claims 1 to 6, wherein compound (B) is selected from
dimethyl phthalate,
diethyl phthalate,
dipropyl phthalate,
diisopropyl phthalate,
dibutyl phthalate,
diisobutyl phthalate,
dicyclopentyl phthalate,
diisooctyl phthalate,
dioctyl phthalate and
dicyclohexyl phthalate.

8. Solid catalyst composition comprising the electron donor composition of any one of claims 1 to 7.

9. Solid catalyst composition according to claim 8 further comprising a Mg-containing compound and a Ti-containing compound.

10. Solid catalyst composition according to claim 9, wherein the Mg-containing compound comprises MgHal₂, wherein Hal is F, Cl, Br or I.

11. Solid catalyst composition according to claim 9 or 10, wherein the Ti-containing compound is represented by the general formula (III) Ti(OR¹³)ₘ₋ₓYₓ, wherein R¹³ is a linear or branched C₁₋₁₀-alkyl, Y is Cl, Br or I, m is 3 or 4 and x is 1, 2, 3 or 4.

12. Solid catalyst composition according to any one of claims 9 to 11, wherein the wt% ratio of Mg-containing compound to electron donor composition is in the range of 0,1 to 50.

13. Use of the solid catalyst composition according to any one of claims 8 to 12 for the polymerization of an α-olefin.

14. Use according to claim 13 wherein the α-olefin comprises at least one compound represented by formula (V) H₂C=CHR¹⁵, wherein R¹⁵ is hydrogen or a hydrocarbon group having 1 to 6 carbon atoms.

15. Process for the production of a polymer comprising the following steps:
(a) providing a solid catalyst composition according to any one of claims 8 to 12
(b) reacting said catalyst composition with at least one organoaluminum compound having the general formula (IV) AlR¹⁶ₙ X₃₋ₙ, wherein R is H or an C₁₋₂₀-alkyl group, X is halogen and 1 < n ≤ 3,
(c) adding one or more α-olefin monomer compounds, and
(d) polymerizing the α-olefin monomers, thereby obtaining a polyolefin.

16. Process according to claim 15, wherein the α-olefin comprises at least one compound represented by formula H₂C=CHR¹⁵, wherein R¹⁵ is hydrogen or a hydrocarbon group having 1 to 6 carbon atoms.

17. Process according to claim 15 or 16, wherein step (b) is carried out in the presence of an external donor compound.

## Patentansprüche

1. Elektronendonorzusammensetzung umfassend
(A) wenigstens eine durch die folgende Formel (I) dargestellte Verbindung: 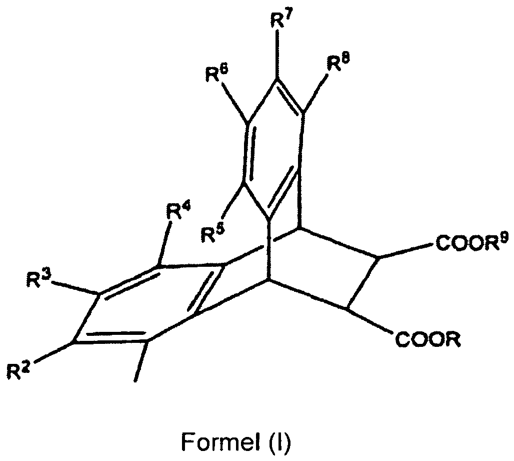 und
(B) wenigstens eine durch die Formel (II) dargestellte Verbindung: 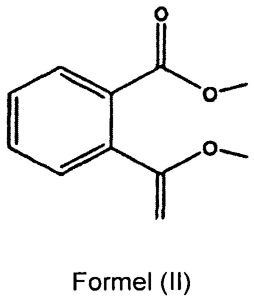 wobei R¹, R², R³, R⁴, R⁵, R⁶, R⁷ und R⁸ gleich oder voneinander verschieden sind und ausgewählt sind aus Wasserstoff, Halogen, linearem oder verzweigtem C₁₋₂₀-Alkyl, C₆₋₂₀-Aryl, C₇₋₂₀-Aralkyl, 4- bis 7-gliedrigem Cyclyl; R⁹ und R¹⁰ entweder gleich oder voneinander verschieden sein können und ausgewählt sind aus linearem oder verzweigtem C₁₋₂₀-Alkyl, C₆₋₂-Aryl, C₇₋₂₀-Aralkyl, 4- bis 7-gliedrigem Cyclyl; und R¹¹ und R¹² entweder gleich oder voneinander verschieden sind und ausgewählt sind aus C₁₋₁₀-Alkyl, 4- bis 7-gliedrigem Cyclyl, C₆₋₂₀-Alkyl und C₇₋₂₀-Aralkyl.

2. Elektronendonorzusammensetzung nach Anspruch 1, wobei R¹, R², R³, R⁴, R⁵, R⁶, R⁷ und R⁸ entweder gleich oder voneinander verschieden sind und ausgewählt sind aus Wasserstoff, Halogen, linearem oder verzweigtem C₁₋₆-Alkyl.

3. Elektronendonorzusammensetzung nach Anspruch 1 oder 2, wobei R⁹ und R¹⁰ entweder gleich oder voneinander verschieden sein können und ausgewählt sind aus linearem oder verzweigtem C₁₋₆-Alkyl, C₆₋₁₀-Aryl und 4- bis 7-gliedrigem Cyclyl.

4. Elektronendonorzusammensetzung nach einem der Ansprüche 1 bis 3, wobei R¹¹ und R¹² entweder gleich oder voneinander verschieden sind und ausgewählt sind aus C₁₋₆-Alkyl und 4- bis 7-gliedrigem Cyclyl.

5. Elektronendonorzusammensetzung nach einem der Ansprüche 1 bis 4, wobei das Gewichtsverhältnis von (A)/(B) im Bereich von 1:10 bis 2:1 liegt.

6. Elektronendonorzusammensetzung nach einem der Ansprüche 1 bis 5, wobei die Verbindung (A) ausgewählt ist aus
9,10-Dihydroanthracen-9,10-α,β-methylsuccinat,
9,10-Dihydroanthracen-9,10-α,β-diethylsuccinat,
9,10-Dihydroanthracen-9,10-α,β-succinsäuredipropylester,
9,10-Dihydroanthracen-9,10-α,β-diisopropylsuccinat,
9,10-Dihydroanthracen-9,10-α,β-succinsäuredibutylester,
9,10-Dihydroanthracen-9,10-α,β-succinsäurediisobutylester,
9,10-Dihydroanthracen-9,10-α,β-succinsäuredicyclopentylester,
9,10-Dihydroanthracen-9,10-α,β-succinsäuredicyclohexylester und
9,10-Dihydroanthracen-9,10-α,β-succinsäuredibenzylester.

7. Elektronendonorzusammensetzung nach einem der Ansprüche 1 bis 6, wobei die Verbindung (B) ausgewählt ist aus
Dimethylphthalat,
Diethylphthalat,
Dipropylphthalat,
Diisopropylphthalat,
Dibutylphthalat,
Diisobutylphthalat,
Dicyclopentylphthalat,
Diisooctylphthalat,
Dioctylphthalat und
Dicyclohexylphthalat.

8. Feste Katalysatorzusammensetzung, umfassend die Elektronendonorzusammensetzung nach einem der Ansprüche 1 bis 7.

9. Feste Katalysatorzusammensetzung nach Anspruch 8, weiterhin umfassend eine Mg-enthaltende Verbindung und eine Ti-enthaltende Verbindung.

10. Feste Katalysatorzusammensetzung nach Anspruch 9, wobei die Mg-enthaltende Verbindung MgHal₂ umfasst und Hal F, Cl, Br oder I ist.

11. Feste Katalysatorzusammensetzung nach Anspruch 9 oder 10, wobei die Ti-enthaltende Verbindung durch die allgemeine Formel (III) Ti(OR¹³)ₘ₋ₓYₓ dargestellt ist und R¹³ lineares oder verzweigtes C₁₋₁₀-Alkyl ist, Y Cl, Br oder I ist, m 3 oder 4 ist und x 1, 2, 3 oder 4 ist.

12. Feste Katalysatorzusammensetzung nach einem der Ansprüche 9 bis 11, wobei das Gewichtsverhältnis von Mg-enthaltender Verbindung zur Elektronendonorzusammensetzung im Bereich von 0,1 bis 50 liegt.

13. Verwendung der festen Katalysatorzusammensetzung nach einem der Ansprüche 1 bis 12 zur Polymerisation eines α-Olefins.

14. Verwendung nach Anspruch 13, wobei das α-Olefin wenigstens eine durch die Formel (V) dargestellte Verbindung H₂C=CHR¹⁵ umfasst und R¹⁵ Wasserstoff oder eine Kohlenwasserstoffgruppe mit 1 bis 6 Kohlenstoffatomen ist.

15. Verfahren zur Herstellung eines Polymers, umfassend die folgenden Schritte:
(a) Bereitstellen einer festen Katalysatorzusammensetzung nach einem der Ansprüche 8 bis 12
(b) Umsetzen der Katalysatorzusammensetzung mit wenigstens einer Organoaluminiumverbindung mit der allgemeinen Formel (IV) AIR¹⁶ ₙX₃₋ₙ, wobei R H oder eine C₁₋₂₀-Alkygruppe ist, X ein Halogen und 1 < n ≤ 3 3 ist,
(c) Zugeben eines oder mehrerer α-Olefinmonomerverbindungen und
(d) Polymerisieren der α-Olefinmonomere, wobei das Polyolefin erhalten wird.

16. Verfahren nach Anspruch 15, wobei das α-Olefin wenigstens eine durch die Formel H₂C=CHR¹⁵ dargestellte Verbindung umfasst und R¹⁵ Wasserstoff oder eine Kohlenwasserstoffgruppe mit 1 bis 6 Kohlenstoffatomen ist.

17. Verfahren nach Anspruch 15 oder 16, wobei Schritt (b) in Gegenwart einer externen Donorverbindung ausgeführt wird.

## Revendications

1. Composition de donneur d'électrons comprenant
(A) au moins un composé représenté par la formule suivante (I) : 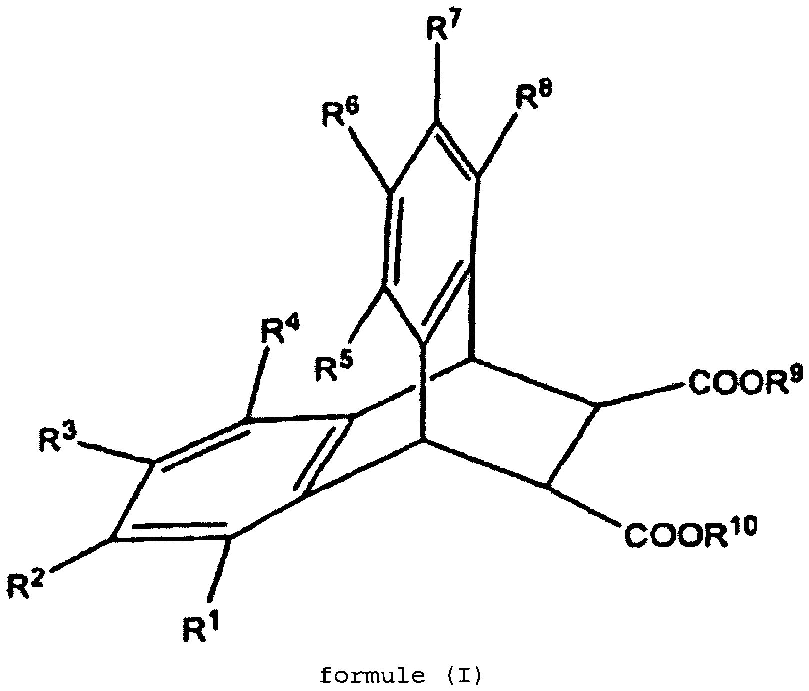 et
(B) au moins un composé représenté par la formule (II) : 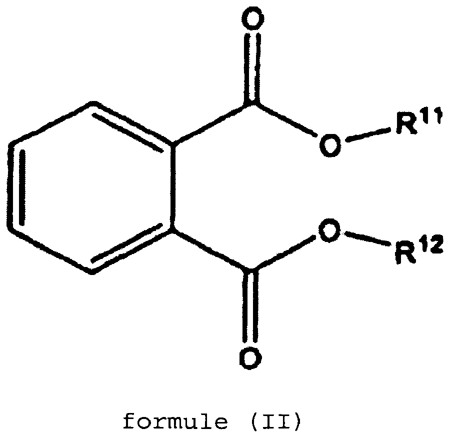 dans lesquelles R¹, R², R³, R⁴, R⁵, R⁶, R⁷ et R⁸ ont des significations identiques ou différentes sélectionnées parmi hydrogène, halogène, alkyle en C₁₋₂₀ linéaire ou ramifié, aryle en C₆₋₂₀, aralkyle en C₇₋₂₀, cyclyle à 4 à 7 éléments ; R⁹ et R¹⁰ peuvent avoir des significations identiques ou différentes sélectionnées parmi alkyle en C₁₋₂₀ linéaire ou ramifié, aryle en C₆₋₂₀, aralkyle en C₇₋₂₀, cyclyle à 4 à 7 éléments ; et R¹¹ et R¹² ont des significations identiques ou différentes sélectionnées parmi alkyle en C₁₋₁₀, cyclyle à 4 à 7 éléments, alkyle en C₆₋₂₀ et aralkyle en C₇₋₂₀.

2. Composition de donneur d'électrons selon la revendication 1, dans laquelle R¹, R², R³, R⁴, R⁵, R⁶, R⁷ et R⁸ ont des significations identiques ou différentes sélectionnées parmi hydrogène, halogène et alkyle en C₁₋₆ linéaire ou ramifié.

3. Composition de donneur d'électrons selon la revendication 1 ou 2, dans laquelle R⁹ et R¹⁰ peuvent avoir des significations identiques ou différentes sélectionnées parmi alkyle en C₁₋₆ linéaire ou ramifié, aryle en C₆₋₁₀ et cyclyle à 4 à 7 éléments.

4. Composition de donneur d'électrons selon l'une quelconque des revendications 1 à 3, dans laquelle R¹¹ et R¹² ont des significations identiques ou différentes sélectionnées parmi alkyle en C₁₋₆ et cyclyle à 4 à 7 éléments.

5. Composition de donneur d'électrons selon l'une quelconque des revendications 1 à 4, dans laquelle le pourcentage en poids de (A)/(B) est dans la plage de 1/10 à 2/1.

6. Composition de donneur d'électrons selon l'une quelconque des revendications 1 à 5, dans laquelle le composé (A) est sélectionné parmi
le butanedioate de 9,10-dihydroanthracène-9,10-α,β-méthyle,
le butanedioate de 9,10-dihydroanthracène-9,10-α,β-diéthyle,
l'ester dipropylique d'acide 9,10-dihydroanthracène-9,10-α,β-butanedioïque,
le succinate de 9,10-dihydroanthracène-9,10-α,β-diisopropyle,
l'ester dibutylique d'acide 9,10-dihydroanthracène-9,10-α,β-butanedioïque,
l'ester diisobutylique d'acide 9,10-dihydroanthracène-9,10-α,β-butanedioïque,
l'ester dicyclopentylique d'acide 9,10-dihydroanthracène-9,10-α,β-butanedioïque,
l'ester dicyclohexylique d'acide 9,10-dihydroanthracène-9,10-α,β-butanedioïque et
l'ester dibenzylique d'acide 9,10-dihydroanthracène-9,10-α,β-butanedioïque.

7. Composition de donneur d'électrons selon l'une quelconque des revendications 1 à 6, dans laquelle le composé (B) est sélectionné parmi
le phtalate diméthylique,
le phtalate diéthylique,
le phtalate dipropylique,
le phtalate diisopropylique,
le phtalate dibutylique,
le phtalate diisobutylique,
le phtalate dicyclopentylique,
le phtalate diisooctylique,
le phtalate dioctylique et
le phtalate dicyclohexylique.

8. Composition de catalyseur solide comprenant la composition de donneur d'électrons selon l'une quelconque des revendications 1 à 7.

9. Composition de catalyseur solide selon la revendication 8, comprenant en outre un composé contenant du Mg et un composé contenant du Ti.

10. Composition de catalyseur solide selon la revendication 9, dans laquelle le composé contenant du Mg comprend MgHal₂, dans laquelle Hal est F, Cl, Br ou I.

11. Composition de catalyseur solide selon la revendication 9 ou 10, dans laquelle le composé contenant du Ti est représenté par la formule générale (III) Ti(OR¹³)ₘ₋ₓYₓ, dans laquelle R¹³ est un alkyle en C₁₋₁₀ linéaire ou ramifié, Y est Cl, Br ou I, m est 3 ou 4 et x est 1, 2, 3 ou 4.

12. Composition de catalyseur solide selon l'une quelconque des revendications 9 à 11, dans laquelle le pourcentage en poids entre composé contenant du Mg et composition de donneur d'électrons est dans la plage de 0,1 à 50.

13. Utilisation de la composition de catalyseur solide selon l'une quelconque des revendications 8 à 12 pour la polymérisation d'une α-oléfine.

14. Utilisation selon la revendication 13, dans laquelle l'α-oléfine comprend au moins un composé représenté par la formule (V) H₂C=CHR¹⁵, dans laquelle R¹⁵ est hydrogène ou un groupe hydrocarbure ayant 1 à 6 atomes de carbone.

15. Procédé de production d'un polymère comprenant les étapes suivantes :
(a) fournir une composition de catalyseur solide selon l'une quelconque des revendications 8 à 12,
(b) faire réagir ladite composition de catalyseur avec au moins un composé d'organoaluminium ayant la formule générale (IV) AlR¹⁶nX₃₋ₙ, dans laquelle R est H ou un groupe alkyle en C₁₋₂₀, X est halogène et 1 < n ≤ 3,
(c) ajouter un ou plusieurs composés monomères d'α-oléfine, et
(d) polymériser les monomères d'α-oléfine, obtenant de ce fait une polyoléfine.

16. Procédé selon la revendication 15, dans lequel l'α-oléfine comprend au moins un composé représenté par la formule H₂C=CHR¹⁵, dans laquelle R¹⁵ est hydrogène ou un groupe hydrocarbure ayant 1 à 6 atomes de carbone.

17. Procédé selon la revendication 15 ou 16, dans lequel l'étape (b) est effectuée en présence d'un composé donneur externe.
